# EUROPÄISCHE PATENTSCHRIFT

(11) **EP 2 625 576 B1**
(45) Veröffentlichungstag und Bekanntmachung des Hinweises auf die Patenterteilung: **22.06.2016**
(21) Anmeldenummer: 11761345.5
(22) Anmeldetag: 22.09.2011
(51) Int. Cl.: G05B 19/042, A47L 15/46, D06F 33/00, D06F 58/28, H02J 3/14, H04B 3/54

(54) **HAUSGERÄT MIT EINER STEUERUNG FÜR EIN ELEKTRISCHES ENERGIEVERSORGUNGSNETZ MIT ZUGEHÖRIGEM DATENNETZ SOWIE VERFAHREN ZUM BETREIBEN EINER STEUERUNG EINES HAUSGERÄTES AN DIESEM ENERGIEVERSORGUNGSNETZ**
HOUSEHOLD APPLIANCE HAVING A CONTROLLER FOR AN ELECTRICAL ENERGY SUPPLY NETWORK HAVING AN ASSOCIATED DATA NETWORK AND METHOD FOR OPERATING A CONTROLLER OF A HOUSEHOLD APPLIANCE ON SAID ENERGY SUPPLY NETWORK
APPAREIL MÉNAGER COMPRENANT UNE COMMANDE POUR UN RÉSEAU DE DISTRIBUTION D'ÉNERGIE ÉLECTRIQUE AVEC UN RÉSEAU DE DONNÉES ASSOCIÉ ET PROCÉDÉ DE FONCTIONNEMENT D'UNE COMMANDE D'UN APPAREIL MÉNAGER SUR CE RÉSEAU DE DISTRIBUTION D'ÉNERGIE

(30) Priorität: 07.10.2010 DE 102010042172
(43) Veröffentlichungstag der Anmeldung: 14.08.2013
(73) Patentinhaber: BSH Hausgeräte GmbH, 81739 München (DE)
(72) Erfinder: HÄPP, Claudia, 80639München (DE); GRIMMINGER, Jochen, 86660 Tapfheim (DE); HABERLANDER, Tanja, 81739 München (DE)
(86) Internationale Anmeldenummer: PCT/EP2011/066526
(87) Internationale Veröffentlichungsnummer: WO 2012/045596

(56) Entgegenhaltungen:
- DE-A1-102008 043 914
- DE-A1-102008 062 349
- US-A1- 2008 272 934
- US-A1- 2010 063 644

## Beschreibung

Die Erfindung betrifft ein Hausgerät mit einer Steuerung, die einen rechnerartigen Steuerungsteil, einen Steuerungsteil für Einstelldaten, einen Steuerungsteil für Betriebsdaten sowie Aktoren als wesentliche Bestandteile aufweist, wobei die Aktoren über Verstärker angesteuert werden, und wobei durch den rechnerartigen Steuerungsteil aus den Einstelldaten und aus den Betriebsdaten Daten für die Ansteuerung der Aktoren ermittelt werden, wobei ein Betrieb der Steuerung an einem neuartigen Energieversorgungsnetz mit Datennetz zum Datenaustausch über dieses Energieversorgungsnetz vorgesehen ist.

Ferner betrifft die Erfindung ein Verfahren zum Betreiben einer Steuerung eines Hausgerätes an einem neuartigen Energieversorgungsnetz mit einer Datenübertragung von Daten über dieses Energieversorgungsnetz, wobei Einstelldaten der Steuerung, Betriebsdaten aus dem Prozess des Hausgerätes, sowie Daten aus den Energieversorgungsnetz durch einen Rechner zur Verarbeitung gelangen, um Stellgrößen für Aktoren des Hausgerätes ermitteln zu können.

Ein solches Hausgerät und ein solches Verfahren gehen jeweils hervor aus jedem der Dokumente US 2010/0063644 A1, US 2008/0272934 A1 und DE 10 2008 062 349 A1.

Hausgeräte beziehungsweise Haushaltgeräte betreffen im Folgenden Geräte, die zur Haushaltführung eingesetzt werden. Das kann ein größeres Gerät, wie beispielsweise eine Waschmaschine, ein Wäschetrockner, eine Geschirrspülmaschine, ein Backofen, ein Herd, eine Dunstabzugshaube, ein Kältegerät, eine Kühlgefrierkombination oder ein Klimagerät sein. Es kann aber auch ein Haushaltskleingerät, wie beispielsweise ein Kaffeevollautomat oder eine Küchenmaschine sein.

Im Vorfeld der Erfindung wird berücksichtigt, dass das Betreiben von Hausgeräten eines Haushaltes, für den eine Lieferung elektrischer Energie durch einen öffentlichen Energieversorger mit einem zugehörigen öffentlichen Versorgungsnetz unter Abrechnung der verbrauchten Energie gegenüber dem Betreiber erfolgt, einem signifikanten Wandel unterliegt, da öffentliche Energieversorger aufgrund gesetzlicher Vorgaben künftig verpflichtet sind, lastvariable und tageszeitabhängige Tarife anzubieten. Im Rahmen dieser gesetzlichen Änderungen werden die traditionellen Stromzähler zur Erfassung der in einem Haushalt verbrauchten Energie durch intelligente Stromzähler ersetzt, die in der Lage sind, den gerade aktuellen Stromtarif anzuzeigen beziehungsweise als ein Tarifsignal dem Betreiber von Hausgeräten drahtgebunden oder drahtlos zur Verfügung zu stellen. Die intelligente Stromzählung geht entsprechend dem meist auch benutzten Begriff "Smart Metering" mit weiteren Fähigkeiten des Energieversorgungsnetzes einher, die einen umfassenden Datenaustausch im elektrischen Energieversorgungsnetz zwischen einem und mehreren Erzeugern und mehreren Verbrauchern elektrischer Energie betreffen, so dass dem Grund nach davon gesprochen werden kann, dass Intelligenz im Energieversorgungsnetz vorhanden ist. Dazu kann auch gehören, dass das Energieversorgungsnetz mit einem Strommanagement versehen ist.

Zurückliegend war der Betreiber eines Hausgerätes, der einen niederen Stromtarif nutzen wollte, gehalten, den Betrieb des jeweiligen Hausgerätes durch eine Startzeitvorwahl des Gerätes so auszurichten, dass auch tatsächlich ein niederer Stromtarif genutzt werden konnte. Es musste also die Tarifstruktur eines Anbieters elektrischer Energie berücksichtigt werden, die jedoch meist in Bezug auf einen Anbieter elektrischer Energie bezüglich des Tageszeitablaufes gleichförmig verlief.

Durch die neuen insbesondere gesetzlichen Vorgaben kann es dazu kommen, dass die Tarife von hoch bis niedrig innerhalb sehr kurzer Zeiträume zum Beispiel auch von Minuten, evtl. sogar von Sekunden wechseln. Es können jedoch auch genauso kurzfristig restriktive Vorgaben an den Verbraucher, der das Hausgerät in seinem Haushalt betreiben möchte, ergehen, dass zeitweise eine Beschränkung des Bezugs elektrischer Energie pro Zeiteinheit, also eine verminderte Leistungsaufnahme bis zu einer Unterbrechung der Leistungsaufnahme zu berücksichtigen sind.

Durch die DE 10 2008 062 349 A1 werden für Hausgeräte, wie Waschmaschinen, Trockner oder Geschirrspüler, die an Energieversorgungsnetzen mit Intelligenz betrieben werden, Strategien angegeben, wie die Hausgeräte, zum Beispiel eines Haushaltes, preisoptimal in Zeiten niederer Strombezugskosten betrieben werden können. Nach der Offenbarung dieser Druckschrift werden die Hausgeräte lediglich als ohmsche Verbraucher hoher Anschlussleistung betrachtet, ohne dass der Prozessablauf der Hausgeräte bei Ausnutzung von niederen Stromtarifen und zwischenzeitlich erforderlichen Unterbrechungen wegen Vorliegens höherer Stromtarife oder von netzseitigen Vorgaben zur Vermeidung von Leistungsspitzen einer näheren Betrachtung, insbesondere in Bezug auf das Prozessergebnis, unterzogen wird.

Durch die DE 10 2008 043 914 A1 wird ein System offenbart, wie zumindest zwei Hausgeräte, die an eine gemeinsame Energieversorgung angeschlossen sind, betrieben werden können, ohne dass eine momentan über die Energieversorgung maximal bereitgestellte Energiemenge überschritten wird, indem zumindest einem Hausgerät eine Energiemenge kleiner der momentan in Bezug auf dessen Prozessablauf erforderliche Energiemenge zugeteilt wird. Es kann dabei auch berücksichtigt werden, an welcher Stelle des Prozessablaufes sich die an der gemeinsamen Energieversorgung angeschlossenen Hausgeräte jeweils befinden und dem Hausgerät, dessen Prozess sich eher reduzieren beziehungsweise mit einer kleineren Energiemenge betreiben lässt, die kleinere Energiemenge zugeteilt wird. Damit wird eine relative Einschränkung eines einzelnen Hausgerätes in Kauf genommen.

Durch die DE 10 2006 029 950 A1 ist es bekannt, für ein Hausgerät, wie eine Waschmaschine, in der Steuereinheit ein Expertensystem zu implementieren.

Anhand der DE 10 2008 042 832 A1 ist nachzuvollziehen, wie bei einer elektronischen Steuerung für die auch bei der Erfindung angesprochenen Gattung von Hausgeräten zur Sicherstellung eines Bereitschaftsbetriebes (Standby-Betrieb) sowie bei Ausfall des Energieversorgungsnetzes vorzugehen ist, damit kein Datenverlust für den bestimmungsgemäßen Betrieb der elektronischen Steuerung auftritt. Nach dieser Druckschrift ist ein speziell ausgestaltetes Bereitschaftsmodul vorgesehen.

Demgegenüber ist es Aufgabe der Erfindung, mindestens ein Hausgerät mit zugehöriger Steuerung an einem neuartigen elektrischen Energieversorgungsnetz mit innewohnender Intelligenz betreiben zu können, wobei übertragene Daten des Energieversorgungsnetzes bei gleichzeitig vorliegenden Einstelldaten des Hausgerätes zu berücksichtigen sind. Die Einstelldaten werden vom Benutzer des Hausgerätes veranlasst, der interaktiv in den Programmablauf eingreifen kann.

Ferner soll ein Verfahren zum Betreiben einer Steuerung eines Hausgerätes angegeben werden, mithilfe dessen die Steuerung den Betrieb an dem beschriebenen Energieversorgungsnetz durchführen kann.

Diese Aufgabe wird für das eingangs erwähnte Hausgerät dadurch gelöst, dass der rechnerartige Steuerungsteil mit einem Steuerungsteil verbunden ist, in dem ein Graphen-Algorithmus implementiert ist, wobei durch das Zusammenwirken der Steuerungsteile es ermöglichbar ist, dass für das Hausgerät vorliegende Daten des Datennetzes des Energieversorgungsnetzes so berücksichtigbar sind, dass stets ein Betrieb des Hausgerätes fortsetzbar ist.

Bezüglich des eingangs erwähnten Verfahrens wird die Aufgabe dadurch gelöst, dass der Rechner bei Ausführung seiner Verarbeitungsschritte einen Graphen-Algorithmus berücksichtigt, so dass bei Berücksichtigung von Daten des Datennetzes des Energieversorgungsnetzes bedingte, abgeänderte Prozessabläufe des Hausgerätes so miteinander verknüpft werden, dass stets ein Betrieb des Hausgerätes fortgesetzt werden kann.

Zum Wesen der Erfindung gehört, dass der neu geschaffene Prozessablauf des Hausgerätes auf einer Aneinanderreihung von einzelnen, unvollständigen bzw. Teil-Programmabschnitten beruht, die durch den beanspruchten Graphen-Algorithmus in optimaler Weise ausführbar gemacht werden.

Die Erfindung wird durch die von den unabhängigen Patentansprüchen abhängigen Patentansprüche in vorteilhafter Weise weitergebildet.

Mit der Auswahl eines Algorithmus wie des Dijkstra-Algorithmus wird ein Algorithmus zugrunde gelegt, der in der Gerätetechnik, insbesondere bei Navigationsgeräten, schon sehr breit Eingang gefunden hat und somit die gerätetechnische Umsetzung erleichtert ist.

Dadurch dass die Aktoren durch Parametrisierung, d. h. Zuteilung eines Parameters durch die Steuerung für jede Leistungsstufe zur Ansteuerung eines jeweiligen Aktors, betreibbar sind, können sehr unterschiedliche Wirkungen durch den Aktor erzielt werden, die insbesondere bei Empfang von Daten aus dem Netz, die für einen höheren Tarif für die verbrauchte Energie oder für restriktive Vorgaben stehen, einen bezüglich Energieverbrauch herabgesetzten Betrieb des Hausgerätes ermöglichen. Der Prozess kann in einem solchen Fall - wenn auch langsamer - fortgesetzt werden, ohne dass ein evtl. schädlicher Stillstand in Kauf genommen werden muss.

Sofern es sich bei den Aktoren um elektromotorische Antriebe handelt, ist es auch möglich mit dieser Parametrisierung eine Rekuperation bzw. Energierückspeisung in das Energienetz auszulösen.

Da das zugrunde gelegte Energieversorgungsnetz mit dem zugehörigen Datennetz für einen umfassenden Datenaustausch zur Verfügung steht, können sich unter den Daten auch solche Daten sich befinden, die ein Energiemanagement mit mindestens einem weiteren Hausgerät auszuführen gestatten. Somit kann eine, in einem Haushalt für gewisse Zeitabschnitte evtl. begrenzt zur Verfügung stehende, Energiemenge nach der Sinnhaftigkeit zwischen zwei oder weiteren Hausgeräten aufgeteilt werden.

Das dem neuartigen Energieversorgungsnetzes zugeordnete Datennetz für die Datenübertragung kann direkt durch Energie- übertragende Leitungen dieses Energieversorgungsnetzes gebildet werden. Es wird dann eine Modulierung, meist der Trägerfrequenz, wie bei Powerline, Z-Wave oder ZigBee vorgesehen, berücksichtigt.

Es kann jedoch auch eine Datenübertragung über das Internet oder eine Funkübertragungstrecke gewählt werden kann. Diese Übertragungsstrecken sind dann wirkungsgleich wie ein mit dem Energieversorgungsnetz körperlich verbundenes Datennetz.

Im Folgenden wird die Erfindung anhand von in der Zeichnung dargestellten Ausführungsbeispielen schematisch genauer beschrieben. Gleiche Bezugszeichen zeigen gleiche oder vergleichbare Teile. Die Figuren der Zeichnung werden zunächst kurz erläutert:
Fig. 1 zeigt ein Bockschaltbild einer Steuerung eines Hausgerätes zum Betrieb an einem herkömmlichen elektrischen Energieversorgungsnetz;
Fig. 2 zeigt ein Blockschaltbild einer Steuerung eines Hausgerätes zum Betrieb an einem neuartigen Energieversorgungsnetz;
Fig. 3 zeigt Prozessabläufe eines Hausgerätes in Graphendarstellung beim Betrieb an einem neuartigen Energieversorgungsnetz mit einer Steuerung, die erfindungsgemäß ausgebildet ist.

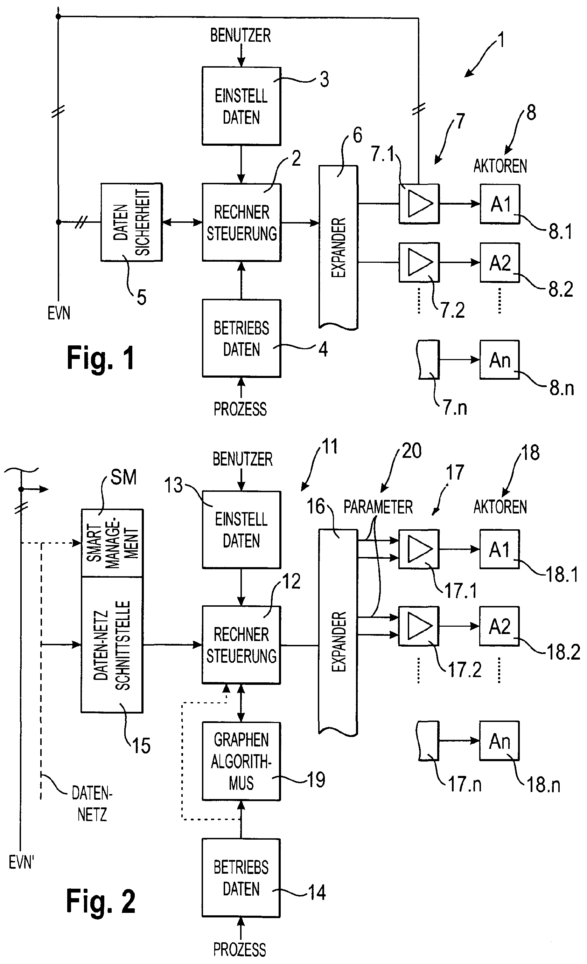

Ein herkömmlicher Aufbau eines Hausgerätes kann unter Bezugnahme auf die Fig. 1 wie folgt dargestellt werden. Mit Bezugszeichen 1 wird die gesamte Steuerung des Hausgerätes bezeichnet, wobei die unter dem Begriff Hausgeräte fallenden Geräte eingangs bereits aufgezählt sind. Durch eine Bedienungsperson werden über Tasten, Drehgriffe, teilweise unter Rückmeldung über eine Anzeige an die Bedienungsperson, in einem Eingabeteil 3 des Hausgerätes die Einstelldaten für den Programmablauf erzeugt. Eine Steuerung, die als elektronische Steuerung 2 üblicherweise über einen Rechner- artigen Aufbau verfügt, kann aus den Einstelldaten einen meist starren Programmablauf des Hausgerätes errechnen, der letztlich nur zusätzlich über Betriebsdaten, also Daten, die von Messfühlern stammen, die physikalische Werte, die beim Betriebsablauf des Hausgerätes auftreten, in elektrische Signale umsetzen, berücksichtigt. Die Betriebsdaten werden zusammengefasst im Steuerungsteil 4 bereitgestellt und der elektronischen Steuerung 2 zur Abfrage angeboten. Der elektronischen Steuerung 2 sind an deren Ausgabebereich über einen Expander 6 Leistungsverstärker bzw. Leistungsschaltstufen 7 zugeordnet, die die entsprechenden Leistungsübertragungen an Aktoren 8, wie Motore, elektrische Heizungen, elektrisch betätigte Ventile und dgl. vornehmen. Diese Aktoren 8 verwenden die aus einem Versorgungsnetz EVN bereitgestellte und entnehmbare Energie, um den Prozessablauf im Hausgerät bewerkstelligen zu können. Beispielweise wird Lauge über Durchlauferhitzer aufgeheizt und mit der Mechanik des Hausgerätes, wie z. B. dem Sprüharm einer Geschirrspülmaschine, die den aktiven Betrieb von Elektromotoren erfordert, an die zu reinigenden Geschirrteile gebracht. Eine elektromotorisch betriebene Pumpe übernimmt die Erzeugung des geeigneten Drucks des Laugenstrahls, der auf die zu reinigenden Geschirrteile beim Austritt aus dem Sprüharm gerichtet ist. Im einfachsten Fall, kann davon ausgegangen werden, dass das elektrische Energieversorgungsnetz EVN für die Einspeisung von Energie an das betreffende Hausgerät unterbrechungsfrei und zwar mit einem konstanten Tarif für die entnommene elektrische Energie zur Verfügung steht. Wird davon ausgegangen, dass dies relativ häufig nicht der Fall ist, wird die Steuerung 1 bzw. die elektronische Steuerung 2 mit einem ergänzenden Steuerungsteil 5 zur Erhaltung von deren Betriebsbereitschaft vorgesehen, so dass auch bei vorübergehendem Ausfall des Versorgungsnetzes EVN, zuletzt verarbeitete und gewonnen Daten bzw. Prozessdaten nicht verloren gehen und ein einmal vom Benutzer ausgelöster Prozessablauf fortgesetzt werden kann. Der Steuerungsteil 5 kann auch die Funktion übernehmen, dass ein Bereitschaftsbetrieb (Standby -Betrieb) vorliegt, sodass letztlich eine Fernsteuerbarkeit des Hausgerätes möglich ist. Ein Eingabebefehl zum Start eines Programmablaufs geht somit auf keinen Fall verloren, auch wenn momentan das Energieversorgungsnetz ausgefallen oder abgeschaltet sein sollte. Der Tarif für die entnommene elektrische Energie bleibt jedoch voraussetzungsgemäß gleich, nötigenfalls auch (wiederholbar) Tageszeit - abhängig. Das Hausgerät braucht demnach keine darauf ausgerichtete Steuerung, um auf - spontane -Tarifänderungen reagieren zu können.

Im Ergebnis wird bei dem Hausgerät das jeweilige Prozessergebnis als Ziel (wie gewaschene und entwässerte Wäsche bei einer Waschmaschine, gereinigtes und getrocknetes Geschirr bei einer Geschirrspülmaschine) direkt erreicht, so wie wenn ein Fahrzeug auf geradliniger Strecke von einem Startpunkt ausgehend seinen Zielpunkt erreicht.

Wird jedoch ein elektrisches Versorgungsnetz EVN' als neuartiges Versorgungsnetz mit Intelligenz berücksichtigt, so ist vor allem mit wechselnden Energie- bzw. Stromtarifen zurechnen. Ferner ist von Abschaltungen bei Überlast oder Vergleichmäßigung der Last im Versorgungsnetz auszugehen. Weitere von dem Versorgungsnetz übertragene Daten können hinzukommen und können eine zusätzliche Reaktion des Hausgerätes bedingen. Der Steuerungsaufbau des Hausgerätes soll an eine solche Situation angepasst werden. Dazu wird auf die Fig. 2 Bezug genommen, wobei funktionsgleiche Bauteile wie in Fig. 1 entweder gleich bezeichnet sind oder eine um 10 höhere Nummer aufweisen. Erfindungsgemäß erfolgt dies dadurch, dass jeder Aktor 18 (18.1, 18.2 ... 18.n) nicht nur mit einer starren Leistung über den jeweiligen Leistungsverstärker bzw. die jeweilige Leistungsschaltstufe 17 beaufschlagt wird, sondern dass dies mit diskreten Werten erfolgen kann, indem bei der Ansteuerung des jeweiligen Aktors 18 Parameter 20 berücksichtigt werden. Somit kann ein Aktor 18, der an sich eine sehr hohe Leistung - wenn keine weiteren Maßnahmen ergriffen würden - wie z. B. für eine Widerstandsheizung für die Aufheizung von Lauge, entnehmen würde, durch die benannte Parametrisierung in mehreren diskreten Werten, also mit herabgesetzter Leistung angesteuert werden. Damit kann unter anderem ein laufender Betrieb des Hausgerätes aufrecht erhalten werden, wenn eine Begrenzung der Leistungsaufnahme durch das Hausgerät als vorgegebener Befehl aus dem Versorgungsnetz zu berücksichtigen ist oder wenn ein hoher Energietarif vorliegt und dieser zu berücksichtigen ist, ohne dass vorgesehen werden muss, den Betrieb des Hausgerätes zeitweise ganz, z. B. über die gesamte Dauer des vorliegenden höheren Energietarifs, unterbrechen zu müssen. Ferner kann, sofern es sich bei dem Aktor um einen elektromotorischen Antrieb handelt, über einen bestimmten Parameter 20 eine Rekuperation bei bestimmten Prozesszuständen ausgelöst werden. Es versteht sich dabei von selbst, dass die Leistungsschaltstufe 17 für den betreffenden Aktor 18 dann auch für eine Energierückspeisung ausgelegt sein muss.

Durch die Parametrisierung mit Parametern 20 der Aktoren 18 (18.1 bis (18.n) des Hausgerätes, d. h. der sehr unterschiedlich möglichen Ansteuerung über deren jeweilige Leistungsverstärker bzw. deren jeweilige Leistungsschaltstufen 17 (17. 1 bis 17.n) ergeben sich für den Prozessablauf sehr verschiedenartige Möglichkeiten um von einem Prozessbeginn zu einem Prozessende zu kommen. Wie ersichtlich, werden die Leistungsstufen 17 über den Expander 16 von der elektronischen Steuerung 12 ausgehend angesteuert. Dabei ist des Weiteren davon auszugehen, dass der Bediener die Einstelldaten, die im Steuerungsteil 13 zusammengefasst zur Verfügung stehen, auch noch in weiter ausgestalteter Weise an die Möglichkeiten eines neuartigen Versorgungsnetzes EVN' mit Intelligenz, bzw. mindestens sich abwechselnder, verschiedener Energietarife, eventuell auch während des Prozessablaufs, anpassen möchte. So kann es möglicherweise Absicht des Bedieners sein, ein schnelles Prozessergebnis zu erzielen, wobei höhere Kosten für die bezogene Energie billigend in Kauf genommen werden. Es kann auch Absicht des Bedieners sein, ausschließlich das Hausgerät bei Vorliegen des kostengünstigsten Stromtarifs zu betreiben, wobei Unterbrechungen im Prozessablauf hingenommen werden. Dabei kann es auch sein, dass in die Betrachtung mit einbezogen werden muss, dass eventuell Komponenten von Reinigungsmitteln nachzudosieren sind, wenn deren Wirkung durch Hinnehmen einer Unterbrechung im Prozessablauf abgenommen hat. Der Ersparnis von Kosten für den Bezug elektrischer Energie können also zusätzliche Kosten für Reinigungsmittel bzw. Komponenten von Reinigungsmitteln gegenüberstehen. Es dürfte aus dieser Darlegung einsichtig werden, dass durch den Wechsel der Datenlage betreffend der Einstelldaten (siehe auch Steuerungsteil 13), die vom Benutzer des Hausgerätes initiiert werden, sowie der Datenlage betreffend der übertragenen Daten des Versorgungsnetzes EVN', die an einer Datenschnittstelle 15, z. B. zugehörig zu einem intelligenten Strommanagement SM mit meist zugehörigem intelligenten Stromzähler (SMART- METER), zur Verfügung stehen, die elektronische Steuerung 12 der Steuerung 10 sehr komplexen Anforderungen gerecht werden muss. Bei einem Prozessablauf mit wechselnden Einstelldaten und Netzdaten ist also davon auszugehen, dass der Ablauf von Prozessbeginn bis Prozessende nicht mehr als geradlinig angesehen werden kann.

Ein Prozessablauf, der auf die Berücksichtigung einer so erheblich unterschiedlich Konstellation von Eingangsdaten (Einstelldaten von Seiten des Benutzers, Daten stammend aus dem Versorgungsnetz) kann nicht mehr durch einen bloßen (z.B. matrixartigen) Zuordner von Eingangsdaten zu den daraus folgenden Programmabläufen in der bzw. durch die Steuerung gelöst werden. Ansätze, bei denen zuerst ein tragbares Speichermedium über einen externen Rechner zur Festlegung eines individuellen bzw. optimalen Programms aus einer Vielzahl von möglichen Programmen bestimmt wird, wie dies die DE 10 2009 046 720 A1 offenbart, dürften für eine möglichst einfache Gerätebenutzung weniger infrage kommen. Es ist ja ferner ja auch zu berücksichtigen, dass während des Prozessablaufes die Einstelldaten, zum Beispiel durch interaktives Handeln der Benutzers und des Weiteren die Daten, die aus dem Versorgungsnetz EVN' kommen, geändert werden. Somit wird es erforderlich, den zu Prozessbeginn als anfänglich - als optimal - ausgewählten Prozessablauf durch einen geänderten Prozessablauf für den weiteren Betrieb des Hausgerätes zu ersetzen, da die Datenlage dies erfordern kann. Diese Veränderung kann sich mehrmals im Laufe des Prozesses ergeben.

Im Ergebnis wird bei dem Hausgerät dessen Steuerung im Hinblick auf das neuartige Versorgungsnetz EVN' ausgelegt und an diesem betrieben wird, das jeweilige Prozessergebnis als Ziel (wie gewaschene und entwässerte Wäsche bei einer Waschmaschine, gereinigtes und getrocknetes Geschirr bei einer Geschirrspülmaschine) nicht mehr direkt (vgl. oben: so wie wenn ein Fahrzeug auf geradliniger Strecke von einem Startpunkt ausgehend seinen Zielpunkt erreicht) erreicht, sondern es wird eine sehr komplex verlaufende Route zurückgelegt, vergleichbar der Route eines Fahrzeuges, das viele Kreuzungen mit diversen Richtungswechseln durchläuft. Bei dieser Situation haben erste Untersuchungen gezeigt, obwohl dies sich erst im Nachhinein als einsichtig darstellt, dass bei Ausrüstung der Steuerung 11 bzw. der rechnerartig aufgebauten Steuerung 12 des Hausgerätes ein Bereich 19 vorgesehen werden muss, in dem ein Algorithmus, insbesondere ein Graphen-Algorithmus, implementiert ist. Nur so kann die Auswahl einer Route, die sich als eine Aneinanderreihung von einzelnen, unvollständigen bzw. Teil- Programmabschnitten darstellt, bestimmt werden, ohne dass zugleich externe Rechnerleistung benötigt wird. Die für das neuartige Versorgungsnetz EVN' auszulegende Steuerung kann also, wie sich überraschender Weise herausstellt hat, mit einem Graphen-Algorithmus als selbständige Einheit betrieben werden. Als Graphen-Algorithmus kann bevorzugt ein Dijkstra Algorithmus oder ein anderer Algorithmus aus der Klasse der Greedy-Algorithmen gewählt werden. Werden die Eingangsdaten (Einstelldaten und Daten des Netzes EVN') der Steuerung in Sinne von vorliegenden Wahrscheinlichkeiten aufgefasst, könnte auch die Implementierung eines Bayes-Netzes anstehen, um zu den Ausgangsdaten für Ansteuerung der Aktoren unter Berücksichtigung von deren anzupassenden Parametern zu gelangen. Unter Bezugnahme auf die Fig. 2 wird noch erläutert, dass die Betriebsdaten, also Daten die im Prozess durch Messfühler erfasst werden und durch den Steuerungsteil 14 aufbereitet werden, auch direkt der elektronischen Steuerung zugeführt werden können, so dass der Steuerungsteil 19, der zur Implementierung des Graphen-Algorithmus, wie Dijkstra- Algorithmus, bestimmt ist, unmittelbar mit der elektronischen Steuerung 12 im Datenaustausch steht. Eine rechnerartig aufgebaute Steuerung mit einem geeignet ausgewählten Mikroprozessor kann jedoch auch mehrere der zuvor ausgewiesenen Steuerungsteile umfassen, was dem Fachmann geläufig ist. Dann findet der zuvor erwähnte Datenaustausch innerhalb des ausgewählten Mikroprozessors statt. Ferner ist zu berücksichtigen, dass das Datennetz des Energieversorgungsnetzes einerseits körperlich mit diesem also mit den Energie- übertragenden Leitungen verbunden sein kann, und dann Übertragungen, wie Powerline, ZigBee, Z-Wave u.a. benutzt werden, jedoch auch andererseits körperlich getrennt von den Energie- übertragenden Leitungen, die Datenübertragung zum Beispiel per Funk oder über das Internet mit Anpassungsgeräten, wie Router dgl. erfolgen kann. Im ersten Fall folgt die Schnittstelle zur Aufbereitung der Netz-Daten für das Hausgerät meist einer Schnittstelle 15, die dem Smart Management SM, also einem Energiemanagement des Energieversorgungsnetzes EVN' mit meist mit eingeschlossenen Smart METER, zugeordnet ist. Ansonsten folgt diese Schnittstelle, an der die Netzdaten für das Hausgerät zur Verfügung stehen, der Internet oder Funkübertragung. Von der Schnittstelle 15 ausgehend können die Netz-Daten drahtlos oder drahtgebunden an das Hausgerät bzw. dessen Steuerung 11 bzw. dessen elektronische Steuerung 12 weitergeleitet werden.

Sofern ein Hausgerät zusammen mit einem zweiten Hausgerät, zum Beispiel Waschmaschine mit Wäschetrockner, die auch zusammen eine Wasch-Trockensäule bilden können, im Verbund miteinander arbeiten, also beide Geräte aktiv sind, so können diese Geräte entweder unmittelbar miteinander einen Datenverbund bilden oder es findet ein Datenaustausch über das Daten-Netz des Energieversorgungsnetzes EVN statt. Es kann dann zugrunde gelegt werden, dass bei Vorliegen eines günstigen Tarifs für die elektrische Energie ein Großteil der zu diesem günstigen Tarif bereitgestellten Energie dem Gerät zugeführt wird, das im Prozessablauf die höhere Leistung benötigt und das andere Gerät unter der Bedingung der Sinnhaftigkeit in einen herabgesetzten Leistungsmodus, zum Beispiel durch geänderte Parametrisierung von dessen Leistungsstufen zur Ansteuerung von dessen Aktoren, gesetzt wird. Im Übrigen wird auch noch auf die eingangs schon erwähnte DE 10 2008 043 914 A1 verwiesen.

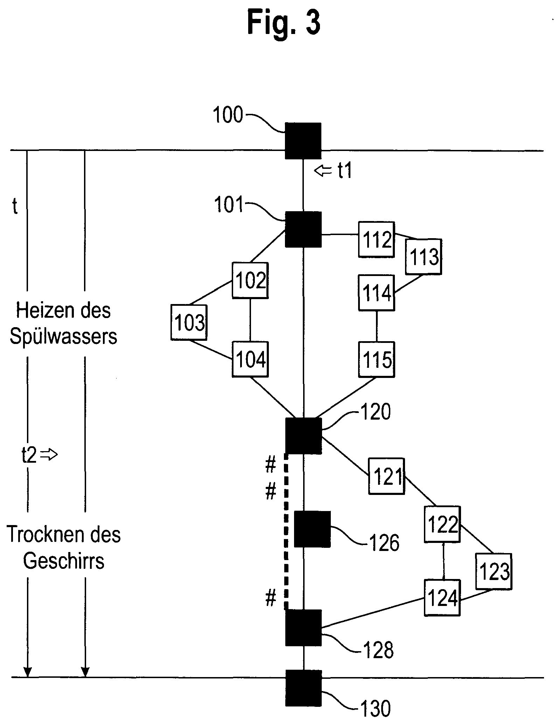

Nachfolgend wird noch anhand von Fig. 3 veranschaulicht, wie die Art des Durchlaufens eines Prozesses eines Hausgerätes mit einer Steuerung 11, die erfindungsgemäß an das neuartige Energieversorgungsnetz EVN' angepasst ist, erfolgt.

Es wird in Fig. 3 der Ablauf von einem Prozessbeginn (Start Programm, obere Linie) bis zu einem Prozessende (Ende Programm, untere Linie) dargestellt. Es wird beispielsweise auf eine Geschirrspülmaschine Bezug genommen. Die Zustände im Prozess werden durch Blöcke repräsentiert. Der bisherige Prozessablauf ist durch die schwarzen Blöcke dargestellt. Von der oberen zu der unteren Linie ist links ein Zeitstrahl t für die Dauer des Prozesses aufgetragen. Daneben (rechts) ist ein Strahl für die Prozessereignisse aufgetragen. Mit Block 100 liegt der Beginn des Prozesses vor. Bei 101 liegt noch ein Prozessablauf, wie bei einer Steuerung, die nicht an ein Energieversorgungsnetz mit vorliegenden Daten über zum Beispiel unterschiedliche Tarife, angepasst ist, vor. Bei t1 liegt bereits das Ereignis vor, dass der Strompreis steigt. Es wird also bewirkt, dass abweichend vom konventionellen Verlauf der Prozess fortgesetzt wird und zwar einmal über den Graphen, der die Blöcke 112, 113, 114, 115 nach 120 verbindet. Das andere Mal geht der Graph von Block 101 nach Block 102 unmittelbar zu Block 104 oder über Block 103 zu Block 104 und weiter zu Block 120. Bei der zuerst genannten Variante verzögert das Gerät die Heizphase bei der zweiten Variante heizt das Gerät mit weniger Heizleistung was durch den auszugebenden Parameter für die Leistungsstufe, die den Durchlauferhitzer für die Aufheizung der Lauge ansteuert, erfolgen kann. Bei t2 sinkt der Strompreis. Das Gerät heizt mit mehr Leistung auf. Der Prozess wird schneller (# # # #). Dies ist durch den Graphen dargestellt, der die schwarzen Blöcke 120 - 126 -128 verbindet. Das Programm- bzw. Prozessende wird bei Block 130 erreicht. Alternativ kann der Prozess auch über den Graphen, der die Blöcke 121, 122, 124 oder über 123 zu 124 verbindet und zu dem schwarzen Block führt, ablaufen. Hier wird berücksichtigt, das der Energieeintrag für die thermisch bedingte Prozessführung - weil zum Beispiel ein in selben Haushalt betriebenes Hausgerät durch übergeordnetes Energiemanagement mehr Energie zugeteilt bekommt - durch die bereits erwähnte Parametrisierung - reduziert ist, jedoch auch durch andere Maßnahmen, wie Einbringen von Klarspüler oder einer Erhöhung der umgewälzten Luftmenge ein praktisch gleichwertiges Ergebnis erreicht wird. Insgesamt betrachtet wird also der Prozess sehr variabel durchgeführt, wobei Daten, die direkt oder indirekt über das Energieversorgungsnetz EVN' ausgetauscht werden, diese variable Prozessführung auslösen. Dazu weist das Hausgerät eine Steuerung 11 auf, die erfindungsgemäß an das neuartige Energieversorgungsnetz EVN' angepasst ist und anhand von Fig. 2 beschrieben ist.

### Bezugszeichenliste

- 1: gesamte Steuerung, konventionell bei EVN
- 2: elektronische Steuerung bzw. Rechner-artiger Teil
- 3: Eingabeteil (Einstelldaten)
- 4: Steuerungsteil für Betriebsdaten
- 5: Steuerungsteil für Daten-Sicherheit
- 6: Expander
- 7: Leistungsverstärker (7.1 bis 7.n)
- 8: Aktor (8.1 bis 8.n)
- 11: gesamte Steuerung bei EVN'
- 12: Steuerung: Rechner-artiger Teil
- 13: Eingabeteil
- 14: Steuerungsteil für Betriebsdaten
- 15: Schnittstelle
- 16: Expander
- 17: Leistungsverstärker (17.1 bis 17.n)
- 18: Aktor (18.1 bis 18.n)
- 19: Steuerungsteil für Implementierung Graphen-Algorithmus
- 20: Parameter für Aktoren
- 100 bis 130: Zustand im Prozess Darstellung durch Blöcke
- EVN: konventionelles Energieversorgungsnetz
- EVN': neuartiges Energieversorgungsnetz
- SM: Smart Management (Strom- bzw. Energiemanagement) von EVN'

## Patentansprüche

1. Hausgerät mit einer Steuerung (1, 11), die folgende Bestandteile aufweist:
einen rechnerartigen Steuerungsteil (2, 12),
einen Steuerungsteil für Einstelldaten (3, 13),
einen Steuerungsteil für Betriebsdaten (4, 14), sowie
Aktoren (8.1 bis 8.n; 18.1 bis 18.n), die über Verstärker (7, 7.1 bis 7.n, 17, 17.1 bis 17.n) angesteuert werden, wobei durch den rechnerartigen Steuerungsteil (2, 12) aus den Einstelldaten und aus den Betriebsdaten Daten für die Ansteuerung der Aktoren ermittelt werden,
wobei ein Betrieb der Steuerung (11) an einem neuartigen Energieversorgungsnetz (EVN') mit Datennetz zum Datenaustausch über dieses Energieversorgungsnetz (EVN') vorgesehen ist,
**dadurch gekennzeichnet, dass** der rechnerartige Steuerungsteil (12) mit einem Steuerungsteil (19) der Steuerung (1,11) verbunden ist, in dem ein Graphen-Algorithmus implementiert ist, wobei durch das Zusammenwirken des rechnerartigen Steuerungsteils (12), des Steuerungsteils (19) und des Graphen-Algorithmus es ermöglichbar ist, dass für das Hausgerät vorliegende Daten des Datennetzes des Energieversorgungsnetzes (EVN') so berücksichtigbar sind, dass stets ein Betrieb des Hausgerätes fortsetzbar ist.

2. Hausgerät nach Anspruch 1, **dadurch gekennzeichnet, dass** als Graphen-Algorithmus ein Algorithmus aus der Klasse der Greedy-Algorithmen, insbesondere ein Dijkstra-Algorithmus zum Einsatz gelangt.

3. Hausgerät nach Anspruch 1 oder 2, **dadurch gekennzeichnet, dass** der Betrieb der Aktoren (18, 18.1 bis 18.n) mittels Parametrisierung erfolgt.

4. Hausgerät nach Anspruch 3, **dadurch gekennzeichnet, dass** ein Parameter für einen jeweiligen Aktor (18) durch die rechnerartige Steuerung (12) ermittelt wird und einem Eingang eines Verstärkers (17) des betreffenden Aktors (18) zugeführt wird.

5. Hausgerät nach einem der Ansprüche 3 und 4, **dadurch gekennzeichnet, dass** bei einem Aktor, der ein elektromotorischer Antrieb ist, durch einen bestimmten Parameter (20) eine Rekuperation auslösbar ist.

6. Hausgerät nach einem der vorhergehenden Ansprüche, **dadurch gekennzeichnet, dass** der Austausch von Daten mit dem neuartigen Energieversorgungsnetz (EVN') über eine Schnittstelle (15) erfolgt, wobei insbesondere die Schnittstelle (15) einem intelligenten Stromzähler (SM) zugeordnet ist.

7. Hausgerät nach Anspruch 6, **dadurch gekennzeichnet, dass** unter den Daten, die der Steuerung (11), als aus dem neuartigen Energieversorgungsnetz (EVN') kommende Daten bereitgestellt werden, auch solche sind, die eine Information über den gerade vorliegenden Tarif für die entnommenen Energie beinhalten.

8. Hausgerät nach Anspruch 6, **dadurch gekennzeichnet, dass** beim Austausch von Daten auch solche Daten ausgetauscht werden, die ein Energiemanagement mit mindestens einem weiteren Hausgerät auszuführen gestatten.

9. Hausgerät nach einem der vorhergehenden Ansprüche, **dadurch gekennzeichnet, dass** als Datennetz für die Datenübertragung die Energie- übertragenden Leitungen des neuartigen Energieversorgungsnetzes (EVN') oder das Internet oder eine Funkübertragungstrecke gewählt werden kann.

10. Hausgerät nach einem der vorhergehenden Ansprüche, **dadurch gekennzeichnet, dass** bei Abschaltung des Energieversorgungsnetzes (EVN'), die Steuerung (11) die Daten des zuletzt ausgeführten Prozessabschnittes sichert.

11. Verfahren zum Betreiben einer Steuerung (11) eines Hausgerätes an einem neuartigen Energieversorgungsnetz (EVN') mit einer Datenübertragung von Daten über dieses Energieversorgungsnetz, wobei Einstelldaten der Steuerung, Betriebsdaten aus dem Prozess des Hausgerätes, sowie Daten aus dem Energieversorgungsnetz durch einen Rechner zur Verarbeitung gelangen, um Stellgrößen für Aktoren des Hausgerätes ermitteln zu können, **dadurch gekennzeichnet, dass** der Rechner bei Ausführung seiner Verarbeitungsschritte einen Graphen-Algorithmus berücksichtigt, so dass bei Berücksichtigung von Daten des Datennetzes des Energieversorgungsnetzes (EVN') bedingte, abgeänderte Prozessabläufe des Hausgerätes so miteinander verknüpft werden, dass stets ein Betrieb des Hausgerätes fortgesetzt werden kann.

12. Verfahren nach Anspruch 11, **dadurch gekennzeichnet, dass** als Graphen-Algorithmus ein Algorithmus aus der Klasse der Greedy-Algorithmen, insbesondere ein Dijkstra-Algorithmus zum Einsatz gelangt.

13. Verfahren nach einem der Ansprüche 11 und 12, **dadurch gekennzeichnet, dass** die Aktoren durch Parametrisierung (20) mit mehreren diskreten Werten angesteuert werden.

14. Verfahren nach einem der Ansprüche 11 bis 13, **dadurch gekennzeichnet, dass** Daten aus dem Energieversorgungsnetz (EVN') verarbeitet werden, die eine Information über den gerade vorliegenden Tarif für die entnommenen Energie oder für eine restriktive Vorgabe zur Herabsetzung des Energieverbrauchs des mit der Steuerung (11) betriebenen Hausgerätes beinhalten.

15. Verfahren nach einem der Ansprüche 11 bis 14, **dadurch gekennzeichnet, dass** ein Datenaustausch über das Energieversorgungsnetz (EVN') mit mindestens einem weiteren Hausgerät erfolgt, um insbesondere eine Verteilung verfügbarer Energie zwischen den Hausgeräten zu ermöglichen.

16. Verfahren nach einem der Ansprüche 11 bis 15, **dadurch gekennzeichnet, dass** bei Verhinderung der Energiezufuhr aus dem Energieversorgungsnetz (EVN') die Daten, die den zuletzt in Ausführung befindlichen Prozessschritt repräsentieren, gesichert werden.

17. Verfahren nach einem der Ansprüche 11 bis 16, **dadurch gekennzeichnet, dass** die Datenübertragung über das Energieversorgungsnetz (EVN') mittels Powerline, Z-Wave oder ZigBee erfolgt.

## Claims

1. Household appliance having a controller (1, 11), which has the following components:
a computer-like control part (2, 12),
a control part for settings data (3, 13),
a control part for operating data (4, 14) and
actuators (8.1 to 8.n; 18.1 to 18.n), which are activated by way of amplifiers (7, 7.1 to 7.n; 17.1 to 17.n), wherein data for activating the actuators is determined by the computer-like control part (2, 12) from the settings data and the operating data,
wherein operation of the controller (11) is provided on a novel energy supply network (EVN') having a data network for exchanging data by way of said energy supply network (EVN'), **characterised in that** the computer-like control part (12) is connected to a control part (19) of the controller (1, 11), in which a graph algorithm is implemented, wherein it can be made possible, by means of the interaction of the computer-like control part (12), the control part (19) and the graph algorithm, for data of the data network of the energy supply network (EVN') present for the household appliance to be taken into account so that operation of the household appliance can always be continued.

2. Household appliance according to claim 1, **characterised in that** the graph algorithm used is an algorithm from the greedy algorithm class, in particular Dijkstra's algorithm.

3. Household appliance according to claim 1 or 2, **characterised in that** the actuators (18, 18.1 to 18.n) are operated by means of parameterisation.

4. Household appliance according to claim 3, **characterised in that** a parameter for a respective actuator (18) is determined by the computer-like controller (12) and supplied to an input of an amplifier (17) of the actuator (18) in question.

5. Household appliance according to one of claims 3 and 4, **characterised in that** with an actuator, which is an electric motor drive, recovery can be initiated by a certain parameter (20).

6. Household appliance according to one of the preceding claims, **characterised in that** the exchange of data with the novel energy supply network (EVN') takes place by way of an interface (15), with the interface (15) being assigned in particular to a smart meter (SM).

7. Household appliance according to claim 6, **characterised in that** the data supplied to the controller (11) as coming from the novel energy supply network (EVN') also includes data containing information about the currently available tariff for the energy drawn.

8. Household appliance according to claim 6, **characterised in that** during the exchange of data such data is also present, which permits energy management with at least one further household appliance.

9. Household appliance according to one of the preceding claims, **characterised in that** the data network selected for the data transmission can be the energy-transmitting lines of the novel energy supply network (EVN') or the internet or a radio transmission link.

10. Household appliance according to one of the preceding claims, **characterised in that** when the energy supply network (EVN') is deactivated, the controller (11) safeguards the data of the last executed process segment.

11. Method for operating a controller (11) of a household appliance on a novel energy supply network (EVN') with a data transmission of data by way of said energy supply network, wherein settings data of the controller, operating data from the process of the household appliance and data from the energy supply network are processed by a computer, in order to be able to determine control variables for actuators of the household appliance, **characterised in that** the computer takes into account a graph algorithm when executing its processing steps, so that modified process sequences of the household appliance, which are brought about when data of the data network of the energy supply network (EVN') is taken into account, can be linked to one another in such a manner that operation of the household appliance can always be continued.

12. Method according to claim 11, **characterised in that** the graph algorithm used is an algorithm from the greedy algorithm class, in particular Dijkstra's algorithm.

13. Method according to one of claims 11 and 12, **characterised in that** the actuators are activated by means of parameterisation (20) with a number of discrete values.

14. Method according to one of claims 11 to 13, **characterised in that** data from the energy supply network (EVN') is processed, which contains information about the currently available tariff for the energy drawn or for a restrictive requirement for reducing energy consumption of the household appliance operated using the controller (11).

15. Method according to one of claims 11 to 14, **characterised in that** a data exchange by way of the energy supply network (EVN') takes place with at least one further household appliance in order to allow in particular a distribution of available energy between the household appliances.

16. Method according to one of claims 11 to 15, **characterised in that** if the energy supply from the energy supply network (EVN') is prevented, the data representing the last process step being executed is safeguarded.

17. Method according to one of claims 11 to 16, **characterised in that** the data transmission takes place by way of the energy supply network (EVN') by means of Powerline, Z-Wave or ZigBee.

## Revendications

1. Appareil ménager comprenant une commande (1, 11) qui présente les composants suivants :
une partie de commande (2, 12) de type ordinateur,
une partie de commande pour des données de paramétrage (3, 13),
une partie de commande pour des données de fonctionnement (4, 14) ainsi que des actionneurs (8.1 à 8.n ; 18.1 à 18.n) qui sont commandés par l'intermédiaire d'amplificateurs (7, 7.1 à 7.n, 17, 17.1 à 17.n), des données pour la commande des actionneurs étant déterminées par la partie de commande (2, 12) de type ordinateur à partir des données de paramétrage et des données de fonctionnement,
un fonctionnement de la commande (11) sur un nouveau réseau d'alimentation en énergie (EVN') avec réseau de données pour l'échange de données étant ménagé par l'intermédiaire de ce réseau d'alimentation en énergie (EVN'),
**caractérisé en ce que** la partie de commande (12) de type ordinateur est reliée à une partie de commande (19) de la commande (1, 11), dans laquelle un algorithme graphique est réalisé, **en ce qu'**en raison de l'interaction de la partie de commande (12) de type ordinateur, de la partie de commande (19) et de l'algorithme graphique, il est rendu possible que des données du réseau de données du réseau d'alimentation en énergie (EVN'), présentes pour l'appareil ménager, puissent être prises en compte de manière à ce qu'un fonctionnement de l'appareil ménager puisse être toujours poursuivi.

2. Appareil ménager selon la revendication 1, **caractérisé en ce qu'**un algorithme de la classe des algorithmes gloutons, notamment un algorithme de Dijkstra, est utilisé en tant qu'algorithme graphique.

3. Appareil ménager selon la revendication 1 ou 2, **caractérisé en ce que** le fonctionnement des actionneurs (18, 18.1 à 18.n) est réalisé par paramétrage.

4. Appareil ménager selon la revendication 3, **caractérisé en ce qu'**un paramètre pour un actionneur respectif (18) est déterminé par la commande (12) de type ordinateur et est amené à une entrée d'un amplificateur (17) de l'actionneur concerné (18).

5. Appareil ménager selon l'une quelconque des revendications 3 ou 4, **caractérisé en ce que** dans un actionneur qui est un entraînement à moteur électrique, une récupération peut être déclenchée par un paramètre déterminé (20).

6. Appareil ménager selon l'une quelconque des revendications précédentes, **caractérisé en ce que** l'échange de données avec le nouveau réseau d'alimentation en énergie (EVN') est réalisé par l'intermédiaire d'une interface (15), notamment l'interface (15) étant attribuée à un compteur d'électricité intelligent (SM).

7. Appareil ménager selon la revendication 6, **caractérisé en ce que** parmi les données qui sont fournies à la commande (11) en tant que données provenant du nouveau réseau d'alimentation en énergie (EVN'), il y en a aussi qui contiennent une information sur le tarif présentement disponible pour l'énergie prélevée.

8. Appareil ménager selon la revendication 6, **caractérisé en ce que** lors de l'échange de données, également des données sont échangées, lesquelles permettent de réaliser une gestion d'énergie avec au moins un autre appareil ménager.

9. Appareil ménager selon l'une quelconque des revendications précédentes, **caractérisé en ce que** les lignes transmettant l'énergie du nouveau réseau d'alimentation en énergie (EVN') ou l'Internet ou un trajet de radiotransmission peuvent être sélectionnés en tant que réseau de données pour la transmission des données.

10. Appareil ménager selon l'une quelconque des revendications précédentes, **caractérisé en ce que** lorsque le réseau d'alimentation en énergie (EVN') est mis hors service, la commande (11) sauvegarde les données de la section de processus exécutée en dernier.

11. Procédé de fonctionnement d'une commande (11) d'un appareil ménager sur un nouveau réseau d'alimentation en énergie (EVN') à l'aide d'une transmission de données par l'intermédiaire de ce réseau d'alimentation en énergie, des données de paramétrage de la commande, des données de fonctionnement provenant du processus de l'appareil ménager, ainsi que des données provenant du réseau d'alimentation en énergie arrivant pour être traitées par un ordinateur afin de pouvoir déterminer des grandeurs de réglage pour des actionneurs de l'appareil ménager, **caractérisé en ce que** l'ordinateur, lorsqu'il exécute ses étapes de traitement, tient compte d'un algorithme graphique, de sorte que des déroulements de processus de l'appareil ménager, modifiés, dus à la prise en compte de données du réseau de données du réseau d'alimentation en énergie (EVN'), sont reliés entre eux de manière à ce qu'un fonctionnement de l'appareil ménager puisse toujours être poursuivi.

12. Procédé selon la revendication 11, **caractérisé en ce qu'**un algorithme de la classe des algorithmes gloutons, notamment un algorithme de Dijkstra, est utilisé en tant qu'algorithme graphique.

13. Procédé selon l'une quelconque des revendications 11 et 12, **caractérisé en ce que** les actionneurs sont commandés par paramétrage (20) à l'aide de plusieurs valeurs discrètes.

14. Procédé selon l'une quelconque des revendications 11 à 13, **caractérisé en ce que** des données provenant du réseau d'alimentation en énergie (EVN') sont traitées, lesquelles contiennent une information sur le tarif présentement disponible pour l'énergie prélevée ou pour une consigne restrictive destinée à baisser la consommation d'énergie de l'appareil ménager fonctionnant à l'aide de la commande (11).

15. Procédé selon l'une quelconque des revendications 11 à 14, **caractérisé en ce qu'**un échange de données avec au moins un autre appareil ménager est réalisé par l'intermédiaire du réseau d'alimentation en énergie (EVN') afin de permettre notamment une répartition de l'énergie disponible entre les appareils ménagers.

16. Procédé selon l'une quelconque des revendications 11 à 15, **caractérisé en ce qu'**en cas d'empêchement de l'alimentation en énergie en provenance du réseau d'alimentation en énergie (EVN'), les données qui représentent l'étape de processus se trouvant en exécution en dernier, sont sauvegardées.

17. Procédé selon l'une quelconque des revendications 11 à 16, **caractérisé en ce que** la transmission des données est réalisée par l'intermédiaire du réseau d'alimentation en énergie (EVN') au moyen de Powerline, Z-Wave ou ZigBee.
